(19) Europäisches Patentamt
European Patent Office
Office européen des brevets

(11) **EP 3 739 517 A1**

(12) **EUROPEAN PATENT APPLICATION**

(43) Date of publication:
**18.11.2020 Bulletin 2020/47**

(51) Int Cl.:
***G06K 9/62*** *(2006.01)*   ***G06K 9/00*** *(2006.01)*

(21) Application number: **19175244.3**

(22) Date of filing: **17.05.2019**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **ArrayStream Technologies Limited
London, Greater London E16 1UP (GB)**

(72) Inventors:
  • **YANG, Yongxin
    Surbiton
    London
    KT6 6EA (GB)**
  • **ZHENG, Yu
    London
    E16 1UP (GB)**
  • **FAN, Ray
    London
    E16 1UP (GB)**

(74) Representative: **Kramer, Dani et al
Mathys & Squire LLP
The Shard
32 London Bridge Street
London SE1 9SG (GB)**

Remarks:
Amended claims in accordance with Rule 137(2)
EPC.

(54) **IMAGE PROCESSING**

(57) The invention relates to a computer-implemented method of image processing, comprising receiving a plurality of images, the plurality of images being related to the state of a variable parameter, wherein each image relates to the state of the variable parameter at different times; using an artificial neural network, determining a vector which represents features of the plurality of images; and performing an action using said vector.

Figure 5

**Description**

<u>Field of disclosure</u>

The present invention relates to a computer-implemented method of image processing and a corresponding apparatus.

<u>Background</u>

The proliferation of computers in recent years has enabled analysis to be performed on datasets that would have been previously considered to be too large or complex to be meaningfully evaluated. However, performing analysis on such large datapoints, even using computers, takes a considerable amount of time and computing power and often still leads to non-optimal results. Computers are used to analyse large sets of raw numeric data; such analysis often takes a long time and leads to an output which can be difficult to analyse or interpret.

<u>Summary of Invention</u>

According to at least one aspect of the present disclosure, there is described herein a computer-implemented method of image processing, comprising: receiving a plurality of images, the plurality of images being related to the state of a variable parameter, wherein each image (or the plurality of images) relates to the state of the variable parameter at different times; using an artificial neural network, determining a vector which represents features of the plurality of images; and performing an action using said vector.

The method enables the analysis of variable data relating to a range of time periods. The variable parameter preferably relates to an entity, and more preferably provides a measurement in respect of the entity.

Optionally, performing an action comprises clustering a plurality of vectors, i.e. assigning a plurality of vectors to one or more clusters, wherein each vector represents features of a different plurality of images, each plurality of images being related to the state of a different variable parameter. Optionally, performing an action further comprises selecting a sub-set of vectors from the clustered plurality of vectors (or single vector) based on one or more criteria thereby to select a sub-set from a set of variable parameters. Optionally, performing an action comprises clustering the vector, i.e. assigning the vector to a cluster, optionally based on one or more criteria.

Preferably, the one or more criteria comprise at least one of: a similarity of the one or more vectors; a similarity of the one or more vectors to a pre-determined reference; and a dissimilarity of one or more vectors. Optionally, the one or more vectors are assessed in combination, more preferably wherein the combination of said vectors forms a combined vector (which may be used in comparison against a reference).

Optionally, the artificial neural network is used for clustering.

Optionally, performing an action comprises comparing the vector against a further vector representing features of a further plurality of images, the further plurality of images being related to the state of a further variable parameter. This may allow the similarity between the vector and the further vector to be assessed.

Optionally, the different variable parameters relate to the same type of parameter in respect of different entities. For example, both parameters may relate to stock price for different companies.

Optionally, the artificial neural network comprises a recursive neural network, preferably wherein the recurrent neural network comprises a seq2seq autoencoder. The artificial neural network may also or alternatively comprise one or more of an unsupervised neural network; a recursive neural network; a convolutional autoencoder; a visual recognition architecture; an average pooling layer; a clustering network, the clustering being based on network modularity; and a deterministic clustering network.

Optionally, each image relates to the state of the variable parameter at a discrete time. In the case of a candlestick chart, each image thus relates to a single discrete time (or time period), in particular a day - in other words, each image is a single "candlestick" (or other data point). Alternatively, each image relates to the state of the variable parameter over a different time period. In other words, the image relates to a plurality of "candlesticks" (or other data points) covering a plurality of time periods, which may overlap.

Preferably, the plurality of images comprises at least parts of a candlestick chart, wherein the variable parameter is price(s) of a financial asset. Optionally, each of the plurality of images relates to a candlestick chart for a different time. Optionally, the variable parameter is 4-dimensional data. Optionally, the variable parameter is one or more of: stock price data; values; prices; risks; and changes in value of over a period of time. Optionally the variable parameter relates to the state of the variable: during a day, a month, and/or a year.

Optionally, the plurality of images comprises frames of a video. Typically, this involves the plurality of images relating to the state of the variable parameter at subsequent times, where each image may relate to the same duration, but a different period, of time. Optionally, the different times are overlapping times and/or the plurality of images relates to a continuous period of time.

Optionally, the method further comprises forming the plurality of images from time-series data.

Optionally, the method further comprises determining an updated vector, the updated vector representing features of an updated plurality of images, the updated plurality of images comprising at least one image from the plurality of images and at least one additional image, preferably wherein the additional image relates to the state of the variable parameter at a later time than the plurality of images. Optionally, the method comprises determining an updated vector periodically, where this enables the analysis of real-time data where an updated vector is determined, for example each 10 seconds, each minute, each hour, each day, and/or each week. Recent images may be received and used to determine an updated vector so that a previous vector can be updated using only recently available images.

Optionally, the action comprises producing a representation of the plurality of images.

Optionally, the method further comprises: receiving a further plurality of images, the further plurality of images being related to the state of a different variable parameter, wherein the further plurality of images relates to the state of the different variable parameter at different times; and using an artificial neural network, determining a vector which represents features of the further plurality of images. Optionally, there may be a plurality of further pluralities, so that there may be received at least 10 pluralities of images, at least 50 pluralities of images, at least 100 pluralities of images, and/or at least 1000 pluralities of images.

Optionally, performing an action comprises identifying a pattern within the plurality of images, such as a candlestick pattern. Optionally, performing an action comprises identifying related patterns within each image of the plurality of images.

Optionally, performing an action comprises determining, by feature recognition, at least one of: a change in stock price; a change in future stock price; a risk; a Sharpe ratio; a Sortino ratio; a Treynor ratio; a volatility; a risk; an increase and/or decrease, preferably in value; and a percentage change, wherein the determining is based on the vector.

Optionally, performing an action comprises one or more of: transmitting data; transmitting a request recommending a purchase and/or sale, preferably the purchase and/or sale of a stock, more preferably a plurality of stocks; transferring an amount of currency; presenting information to a user; transmitting a notification; transferring an amount of money; and operating a speaker, an alarm, and/or a display. Operating an alarm may comprise indicating to a user when the performance of a stock exceeds or falls below a certain threshold, which may be used to encourage the user to buy and/or sell a stock.

Optionally, each of the plurality of images relates to a change in the state of the variable over a period of time. Preferably, the period of time is at least one of: at least one hour; at least 5 hours; at least one day; at least 10 days; at least 20 days; and at least 50 days.

The plurality of images optionally comprises at least 3 images, at least 10 images, at least 50 images, and/or at least 100 images.

According to another aspect of the present disclosure, there is described herein an apparatus for image processing, comprising: means for receiving a plurality of images, the plurality of images being related to the state of a variable parameter, wherein each image relates to the state of the variable parameter at different times; an artificial neural network for determining a vector which represents features of the plurality of images; and means for performing an action using said vector. The means for each of these actions may be a processor. The means for performing an action may be a user interface and/or an actuator.

According to another aspect of the present disclosure, there is described herein a system comprising: a non-transitory memory storing instructions; and one or more hardware processors coupled to the non-transitory memory and configured to execute the instructions from the non-transitory memory to cause the system to perform operations comprising: receiving a plurality of images, the plurality of images being related to the state of a variable parameter, wherein each image relates to the state of the variable parameter at different times; using an artificial neural network, determining a vector which represents features of the plurality of images; and performing an action using said vector.

The disclosure extends to any novel aspects or features described and/or illustrated herein. Further features of the disclosure are characterised by the other independent and dependent claims.

There is described herein a deep learning approach that imitates human's ability to 'see' images representative of a state of a variable parameter, in particular where such images are candlestick charts. Raw 4-D stock time-series are converted to candlestick images and unsupervised convolutional autoencoders are used to learn a representation for price history that encodes semantic information about the 4-D time series. In an alternative, image data (e.g. a pre-existing candlestick chart) may be used directly as an input.

Also described is a method of low-risk diversified portfolio construction for financial assets based on an analysis of a plurality of variable parameters, in particular by segmenting the market by clustering stocks based on their learned deep features. To achieve deterministic clustering without needing to specify the number of clusters, a method of modularity optimisation, originally used for detecting community structure in networks, is adapted to clustering variable parameters.

Also described is a method of evaluating a financial portfolio construction strategy using Financial Times Stock Exchange 100 Index (FTSE 100) stock data. Results show the use of the described methods effectively captures semantic information and that the described portfolio construction method outperforms the FTSE 100 index and many well-known funds.

The invention extends to methods, system and apparatus substantially as herein described and/or as illustrated with reference to the accompanying figures.

The invention also provides a computer program or a computer program product for carrying out any of the methods described herein, and/or for embodying any of the apparatus features described herein, and a computer readable medium having stored thereon a program for carrying out any of the methods described herein and/or for embodying any of the apparatus features described herein.

The invention also provides a signal embodying a computer program or a computer program product for carrying out any of the methods described herein, and/or for embodying any of the apparatus features described herein, a method of transmitting such a signal, and a computer product having an operating system which supports a computer program for carrying out the methods described herein and/or for embodying any of the apparatus features described herein.

Any feature in one aspect of the invention may be applied to other aspects of the invention, in any appropriate combination. In particular, method aspects may be applied to apparatus aspects, and vice versa. As used herein, means plus function features may be expressed alternatively in terms of their corresponding structure, such as a suitably programmed processor and associated memory.

Furthermore, features implanted in hardware may generally be implemented in software, and vice versa. Any reference to software and hardware features herein should be construed accordingly.

As used herein, the term "state" preferably connotes the particular condition that something is in at a specific time.

The disclosure will now be described by way of example, with references to the accompanying drawings in which:

Figures 1 and 2 show exemplary representations of data;

Figure 3 shows an image comprising graphical representations of data;

Figure 4 is an illustration of a generic computer device;

Figure 5 is a flowchart of a method of image processing;

Figure 6 shows a method of selecting a portfolio of variable parameters using a neural network;

Figure 7 shows a method of determining a vector using a neural network;

Figure 8 shows exemplary inputs and outputs from a neural network;

Figure 9 shows a visualisation of the performance of a neural network;

Figure 10 shows a representation of a recursive neural network; and

Figure 11 shows performance of stocks clustered by similarity.

Detailed description

*Candlestick charts*

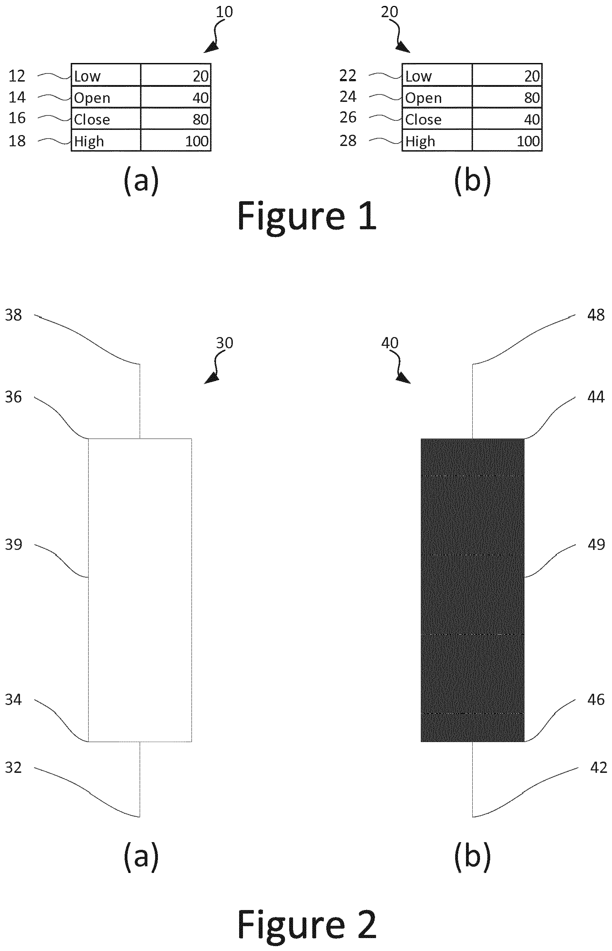

Referring to Figures 1 and 2, there are shown exemplary of representations of data.

More specifically, Figures 1a and 1b show data represented in a numerical form and Figures 2a and 2b show the same data represented in a graphical form, e.g. in the form of an image.

Referring to Figure 1a, there is shown a first datapoint 10 that comprises 4-dimensional data, more specifically the first datapoint 10 comprises a low value 12, an open value 14, a close value 16, and a high value 18. Typically, such a datapoint is used to show the change in a variable parameter over a period of time. As an example where the variable parameter is the price of a financial asset, the first datapoint 10 may show the stock price of a company over a day of trading, where the open value 14 and the close value 16 show the prices at the start of the day and the end of the day respectively, and the low value 12 and the high value 18 show the lowest and highest amounts paid for the stock during the trading day. It will be appreciated that similar datapoints may be used to show data for different time periods, or different types of data.

Referring to Figure 1b, there is shown a second datapoint 20 that contains similar types of data (with different values) to the first datapoint 10. Specifically the second datapoint 20 relates to a low value 22, an open value 24, a close value 26, and a high value 28.

Referring to Figure 2a, there is shown a first graphical representation 30 that relates to the first datapoint 10, this graphical representation shows a low value 32, an open value 14, a close value 36, and a high value 38. The body 39 of the graphical representation is coloured in dependence on the open value 34 and the close value 36. Typically, a lack of colouring of the body 39 indicates that the close value 36 exceeds the open value 34.

Referring to Figure 2b, there is shown a second graphical representation 40 that relates to the second datapoint 20, this graphical representation shows a low value 42, an open value 44, a close value 46, and a high value 48. The body 49 of the graphical representation is coloured in dependence on the open value 44 and the close value 46. Typically, the body 49 being filled in indicates that the open value 44 exceeds the close value 46.

In the example where the data is stock prices, the first datapoint 10 and the first graphical representation 30 relate to a stock price that rises during a trading day and the second datapoint 20 and the second graphical representation 40 relate to a stock price that falls during a trading day. In general, the form of graphical representation shown in Figures 2a and 2b is often referred to as a "candlestick", in particular when used to show stock price movements of security, derivatives, or currencies.

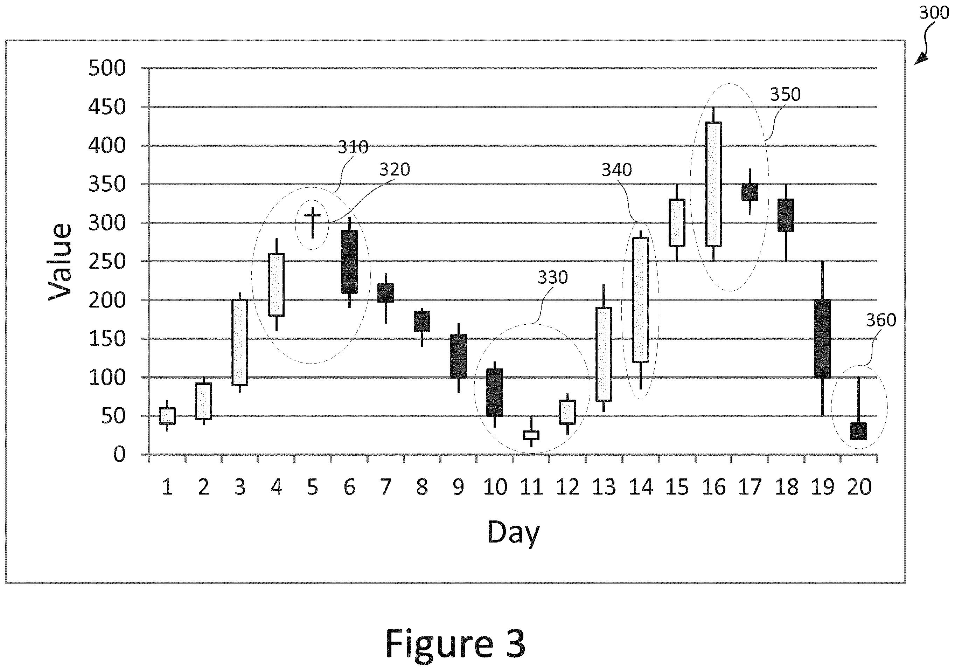

Referring to Figure 3, there is shown an image 300 that comprises a plurality of graphical representations of data. The image 300 comprises a candlestick chart, which itself comprises a plurality of candlesticks. It will be appreciated that each candlestick can be considered to be an image, so that the image 300 may be considered to comprise a plurality of images.

Candlestick charts such as that shown in Figure 3 are commonly used for decision making based on the state and historic state of a variable parameter (e.g. price of a security). Such charts are particularly helpful in that they provide a simple visual indication of the mood or emotion of the market, in that changes in the variable parameter during a plurality of distinct sessions (e.g. a trading day) are plotted in sequence. Human trader typically use candlestick charts to infer information about a market (or otherwise the wider environment dictating the state of the variable parameter), and make decisions accordingly. Users generally infer this information from the individual candlesticks themselves, as well as "patterns" which may be recognisable in the data.

The image 300 shows the change in value of a good (in particular a stock) over a period of twenty days. Each graphical representation in the image 300 relates to the change in value of the good over a single day.

The image 300 contains a number of patterns 310, 320, 330, 340, 350, 360, where each pattern comprises one or more candlesticks. A candlestick chart as shown in the image 300 may be used to show historic stock price data; this historic data may be used to make predictions relating to future price movements. Predictions may be based on the presence in the candlestick chart of various patterns. In the example of the image 300, the patterns present include:

- an "evening doji star" 310, this pattern is considered a reversal signal when it appears after a period of value increase (e.g. it indicates an upcoming drop in price after a period of rising value);
- a "doji" 320, this typically indicates a reversal in value;
- a "morning star" 330, this pattern is considered a reversal signal when it appears after a period of value decrease (e.g. it indicates an upcoming rise in price after a period of falling value);
- a "big white candle" 340 typically indicates an upcoming rise in value;
- a "bearish Harami" 350 is considered to indicate a future fall in value when preceded by a period of price increases; and
- an "inverted black hammer" 360 is considered to be a reversal signal when appearing after a period of falling value.

Patterns may comprise a single candlestick or a plurality of candlesticks. Patterns may also comprise other patterns, as in the example of the evening doji star 310 and the doji 320. Typically, patterns are normally considered in combination, for example the doji 320 has different meanings depending on whether it appears during an uptrend or a downtrend and a different meaning depending on whether it appears during the start of a trend or after a prolonged trend has already occurred.

Historically, traders of stocks have considered candlestick charts and candlestick patterns when making investment decisions. There are lists of known candlestick patterns that are considered to be indicators of price movements and these lists are consulted to determine what is signalled by a candlestick chart.

As computers have become more affordable, available, and widespread, trading and investment decision making has become more dependent on the use of computer analysis; in this computer analysis, the use of candlestick charts is normally eschewed in favour of the use of numerical data. This is not least because candlestick charts present numerical data in an understandable way to humans, who find it difficult interpreting large amounts of raw numerical data, while computers do not experience the same difficulty in interpreting raw numerical data (and indeed computers normally have more trouble interpreting graphical data). Therefore, when used for analysis, computers typically receive raw numerical data as an input and perform analysis on this raw data. For example computers often track the closing value for a stock over a period of time using precise numerical data values.

The present disclosure relates to a computer-implemented method of image processing that considers images formed from numerical data. This method enables computers to perform analysis based on visual cues (rather than more complete numerical data), which counter-intuitively has been determined to improve (at least in some instances) predictive capability as compared to analysis based on numerical data.

*Computing device*

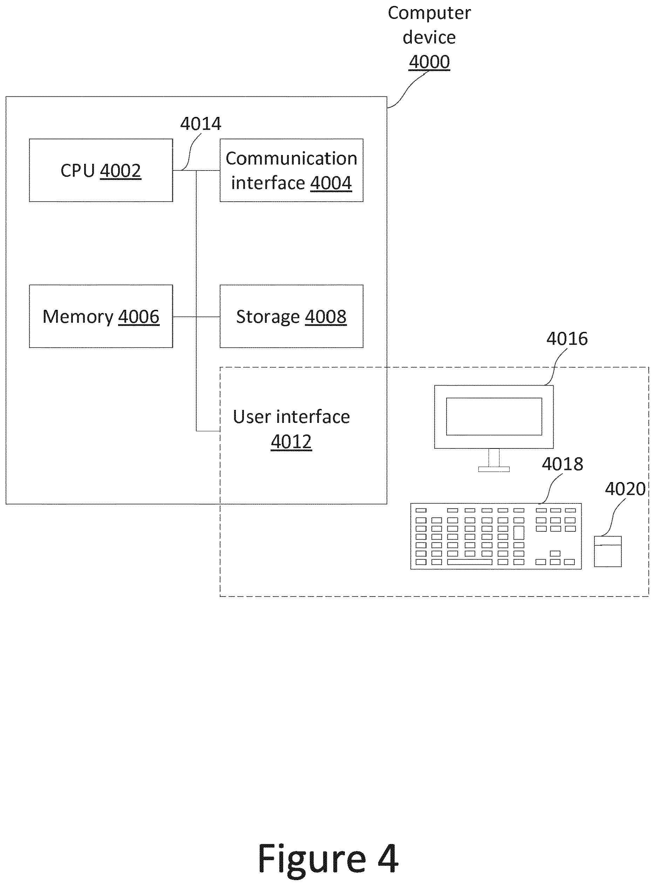

Referring to Figure 4, the image processing is implemented using a computer device 4000. The computer device 4000 comprises a processor in the form of a CPU 4002, a communication interface 4004, a memory 4006, storage 4008 and a user interface 4012 coupled to one another by a bus 4014. The user interface 4012 comprises a display 4016 and an input/output device, which in this embodiment is a keyboard 4018 and a mouse 4020.

The CPU 4002 is a computer processor, e.g. a microprocessor. It is arranged to execute instructions in the form of computer executable code, including instructions stored in the memory 4006 and the storage 4008. The instructions executed by the CPU 4002 include instructions for coordinating operation of the other components of the computer device 4000, such as instructions for controlling the communication interface 4004 as well as other features of a computer device 4000 such as a user interface 4012.

The memory 4006 is implemented as one or more memory units providing Random Access Memory (RAM) for the computer device 4000. In the illustrated embodiment, the memory 4006 is a volatile memory, for example in the form of an on-chip RAM integrated with the CPU 4002 using System-on-Chip (SoC) architecture. However, in other embodiments, the memory 4006 is separate from the CPU 4002. The memory 4006 is arranged to store the instructions processed by the CPU 4002, in the form of computer executable code. Typically, only selected elements of the computer executable code are stored by the memory 4006 at any one time, which selected elements define the instructions essential to the operations of the computer device 4000 being carried out at the particular time. In other words, the computer executable code is stored transiently in the memory 4006 whilst some particular process is handled by the CPU 4002.

The storage 4008 is provided integral to and/or removable from the computer device 4000, in the form of a non-volatile memory. The storage 4008 is in most embodiments embedded on the same chip as the CPU 4002 and the memory 4006, using SoC architecture, e.g. by being implemented as a Multiple-Time Programmable (MTP) array. However, in other embodiments, the storage 4008 is an embedded or external flash memory, or such like. The storage 4008 stores computer executable code defining the instructions processed by the CPU 4002. The storage 4008 stores the computer executable code permanently or semi permanently, e.g. until overwritten. That is, the computer executable code is stored in the storage 4008 non-transiently. Typically, the computer executable code stored by the storage 4008 relates to instructions fundamental to the operation of the CPU 4002.

The communication interface 4004 is configured to support short-range wireless communication, in particular Bluetooth® and WiFi communication, long-range wireless communication, in particular cellular communication, and/or an Ethernet network adaptor. In particular, the communications interface is configured to establish communication connections with other computing devices.

The storage 4008 provides mass storage for the computer device 4000. In different implementations, the storage 4008 is an integral storage device in the form of a hard disk device, a flash memory or some other similar solid state memory device, or an array of such devices.

In some embodiments, there is provided removable storage, which provides auxiliary storage for the computer device 4000. In different implementations, the removable storage is a storage medium for a removable storage device, such as an optical disk, for example a Digital Versatile Disk (DVD), a portable flash drive or some other similar portable solid state memory device, or an array of such devices. In other embodiments, the removable storage is remote from the computer device 4000, and comprises a network storage device or a cloud-based storage device.

A computer program product is provided that includes instructions for carrying out aspects of the method(s) described below. The computer program product is stored, at different stages, in any one of the memory 4006, storage device 4008 and removable storage. The storage of the computer program product is non-transitory, except when instructions included in the computer program product are being executed by the CPU 4002, in which case the instructions are sometimes stored temporarily in the CPU 4002 or memory 4006. It should also be noted that the removable storage 4008 is removable from the computer device 4000, such that the computer program product is held separately from the computer device 4000 from time to time.

*Processing using image data*

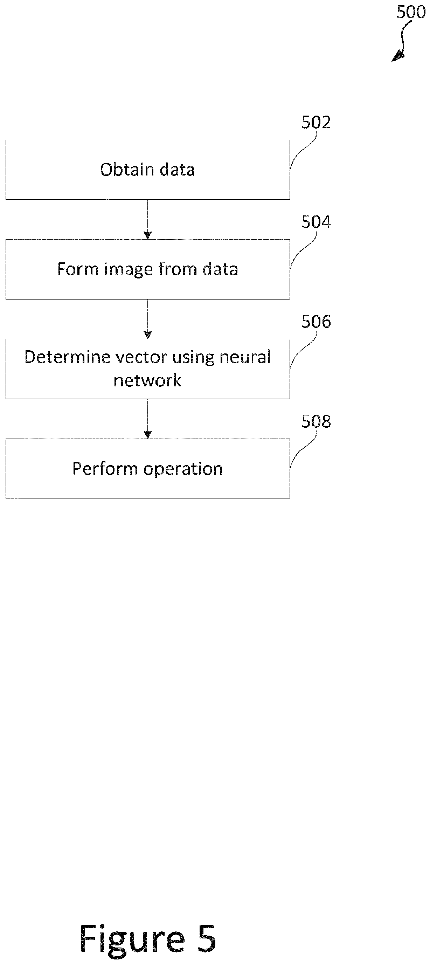

Referring to Figure 5, there is shown a method 500 of performing an operation using a vector representing an image or a plurality of images.

In a first step 502, data is obtained. This data typically relates to 4 dimensional data showing the change in the state of a variable parameter, in particular the value of a good, e.g. a stock, over a period of time. Exemplary data is shown as the first datapoint 10 and the second datapoint 20.

In a second step 504, an image is formed from the data. This typically comprises forming the first candlestick 30 from the first datapoint 10, a second candlestick from a scond datapoint, etc. Typically, an image comprises a plurality of candlesticks, each of which is formed from a separate datapoint. In general, the first datapoint 10, the second datapoint 20, and a number of similar datapoints are used to form the first candlestick 30, the second candlestick 40, and a plurality of other candlesticks. The plurality of candlesticks is used to form the image 300.

In some embodiments, the image 300 is thereafter shown to a person. Typically however, the image 300 is not displayed; instead the image 300 is processed and analysed without being displayed and only results of this analysis and/or outcomes of the analysis are presented. In an alternative, an image is not separately created, and instead pre-existing image data is used as an input.

In a third step 506, the image 300 is received into a neural network, and a vector is determined using a neural network. More specifically, a neural network is used to determine a vector representative of one or more features of the image. Typically, this comprises passing the image into a neural network that has previously been trained on similar data, and determining a vector using an encoder of the neural network.

In a fourth step 508, an appropriate operation is determined using the vector. The vector relates to features of the image and thereby contains information relating to, e.g. candlestick patterns that are present in the image. A variety of operations may be performed using the vector - as will be described later on, an important operation is comparing a vector against other vectors (relating to different variable parameters measured by candlestick charts, e.g. different entities such as stocks) thereby to find a "cluster" of vectors (and thereby entities) which are similar.

*Processing using a plurality of images*

Although the above steps have been described with reference to a single image forming the input to a neural network, improved results may be obtained by using a plurality of images as an input to the neural network (rather than a single image representing a candlestick chart), where each image represents part of a candlestick chart (or a single "candlestick").

In this alternative, in the second step 504, a plurality of images are formed from the data, where each image relates to a single "candlestick" or a plurality of "candlesticks" which are a sub-set of a wider candlestick graph. As an example, three months of stock price data may be obtained and used to form three separate candlestick charts.

In the third step 506, vectors for each of the plurality of images are determined using a neural network. More specifically, the same neural network is used to determine vectors representative of each image. In examples where the plurality of images relates to overlapping datapoints, the images may comprise a sliding window, where the starting periods for each image are consecutive; for example there may be a first image that relates to data from 1 Jan 2000 - 1 Feb 2000, a second image that relates to data from 2 Jan 2000 - 2 Feb 2000, and a third image that relates to data from 3 Jan 2000 - 3 Feb 2000. An operation may then be performed based on the vector, as previously described.

This may provide improved performance by effectively simulating human intake of information provided in candlestick charts, which are read from left to right. Each image may be analogised to a frame within a video in this regard.

The use of a plurality of images may also enable a better assessment to be made of, for example, risk and volatility. A pattern that might go unnoticed in a single three month chart may seem more significant in the context of multiple charts, where each month is contained in a single chart. For example, a dramatic fall over a single day may be lost in a long term (three month) rise; however it may be noticed in segmented images where, instead of there being a three month uptrend, there may be two, one month, uptrends and one, one month, downtrend, which might indicate that the stock is more volatile than a comparable stock without the downtrend.

More generally by using a plurality of images relating to differing times or time periods, both intra- instance and inter-instance differences can be evaluated (where each "instance" is the time/time period to which an individual image within the plurality of images relates). In contrast, the use of a single image allows only the evaluation of inter-instance differences. For example, by forming two three-month long charts from separate groups of three month-long charts, differences can be evaluated between the two three-month periods as well as between each month within each three-month period. Evaluating intra-instance differences may provide richer insights about particular instances, in particular in that the use of a plurality of images allows the relationship between the images (and so the time relationship between the data presented in the images) to be taken into account.

The use of a plurality of images of data may also assist in taking advantage of information as it becomes available. Typically, data becomes available on a rolling basis, where data on recent value changes becomes available for example each month, each day, each hour etc. depending on the timescales of the data used (e.g. monthly trading data usually becomes available at the end of each month). The use of a plurality of images is useable within a sliding window of images, where for example, each month a new month of data becomes available and is then considered alongside two previous months. This can be interpreted as the plurality of images being frames in a video. In some examples, the images relate to frames of a streamed video, where real-time data (or data with a certain time-lag) is continuously received and used to form images.

In some embodiments, the plurality of images relate to candlestick charts for separate periods, where the periods may overlap. The candlestick charts may be for the same stock or for a different stock. With reference to the image 300 of Figure 3, the plurality of images may relate to a plurality of images for different trading periods, for example each image may refer to a period of twenty days as in the image 300 of Figure 3 and the plurality of images may relate (together) to a period of months. Therefore, a trend may be determined using a plurality of images 300.

Clustering

As mentioned, an important operation is identifying clusters of a plurality of vectors. As an example, vectors relating to a stock value may be clustered based on sector, risk, or potential return.

Clustering typically comprises analysing multiple vectors to determine a similarity between vectors (or components thereof). Typically, vectors relating to a plurality of images are clustered together, where the vectors are grouped in dependence on a similarity between the vectors; it will be appreciated that a single vector can also be clustered (within itself) based on a similarity to, for example, previous data or to a reference vector.

Typically, clusters relate to industry. Goods within each industry tend to behave somewhat similarly, e.g. a fall in tourism for a country will likely affect passenger airlines more than it affects shipping businesses. Clusters of stocks are determined based on such similarities. In some embodiments, a plurality of clusters are formed and a number of datapoints are assigned to each cluster, optionally based on a similarity between the datapoints or based on how representative they are of the cluster as a whole (or a particular reference set of characteristics). This allows the total number of datapoints used to represent a particular cluster, or plurality of clusters, to be minimized. This allows a "portfolio" of stocks to be formed of a low number of stocks, which may assist in saving costs. A subset of datapoints within a cluster may be selected for use in such a portfolio.

More generally, clustering may relate to clustering based on any form of similarity. In some embodiments, clusters are determined using a neural network; the similarity may then be determined by a neural network, and so stocks that are not overtly related in any way may be determined to be similar.

In an alternative, datapoints may be selected depending on risk. More specifically, the lowest risk stocks in each cluster may be selected. It will be appreciated that selection may be based on other variables (e.g. stocks with the highest expected rate of return). This may assist in the formation of a diverse "portfolio" including stocks from a number of sectors - where, for example, the best stock within each cluster is selected to form a portfolio, the best stock is typically determined as that having the highest Sharpe ratio (which will be explained later on) of the cluster.

*Neural network*

The step of determining vector(s) and/or clustering in the images typically comprises using an artificial neural network that is trained to predict the future state of variable parameters based on visual cues identified in images relating to historic state. In various embodiments, the neural network comprises an unsupervised neural network; a convolutional neural network; a recursive neural network; and/or an autoencoder. Typically, the neural network comprises a convolutional autoencoder.

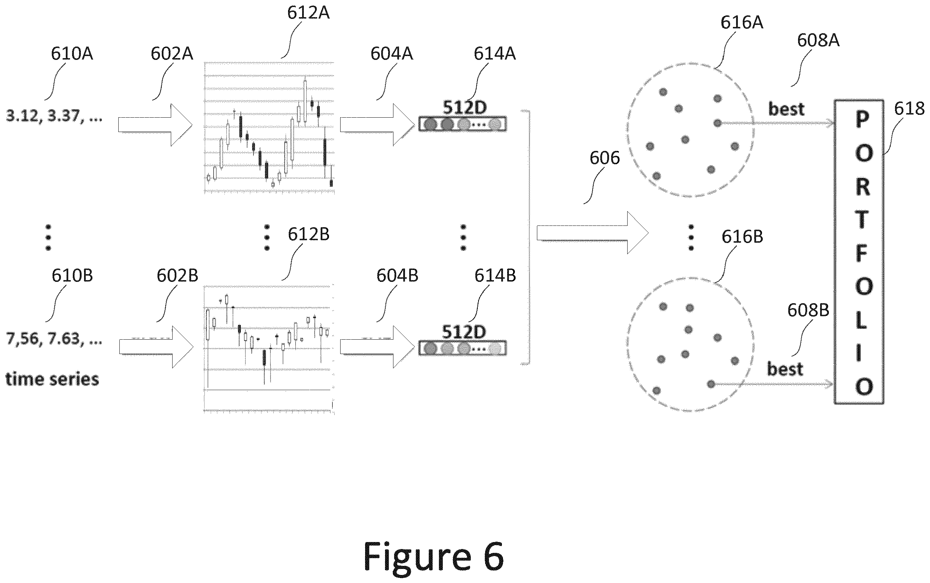

Referring to Figure 6, there is shown a method of selecting a portfolio using an artificial neural network.

As an input, the neural network is passed data 610A, 610B, which data relates to the state of variable parameters (e.g. the behaviour of (typically different) goods) over time.

In a first step 602A, 602B, for each of the plurality of data 610A, 610B, the neural network forms a corresponding image 612A, 612B based on the data 610A, 610B. This step may use a neural network, but more commonly uses available (non-neural-network) graphing software.

Typically, the first step 602A, 602B comprises converting raw 4-channel time series data to candlestick charts.

In a second step 604A, 604B, the neural network is used to determine a corresponding vector 614A, 614B relating to each image 612A, 612B. In this example, determining a vector comprises using a convolutional autoencoder (CAE).

More specifically, the images 612A, 612B are fed into a deep CAE for visual feature learning. These learned features provide a vector embedding of a historical time-series that captures key quantitative and semantic information. The vector output of the CAE represents the graphical information of the candlestick chart and so numerous features can be analysed to determine differences between candlestick charts and/or to identify patterns based on previously analysed candlestick charts (these previous charts being used to train the CAE).

In a third step 606A, 606B, the data is clustered. Clustering occurs based on the similarity between each determined vector. While only two vectors 614A, 614B are explicitly shown in this example, it will be appreciated that typically many more vectors are determined. The vectors 614A, 614B are clustered into clusters 616A, 616B, where each cluster also contains vectors relating to other input data.

In a fourth step 608A, 608B, the best performing datapoint (i.e. vector) in each cluster is determined - this typically comprises determining for each cluster the datapoint that is best representative of the cluster as a whole. Alternatively, the datapoint may be selected based on the corresponding stock having the highest Sharpe ratio

Typically, clustering comprises using a deterministic neural network and a modularity optimisation method. More specifically, a network of stocks is constructed where each node corresponds to a stock, and edges represent the correlation between a pair of stocks (as represented by the learned visual feature vectors).

The datapoints determined in the fourth step 608 are included within a portfolio 618. The clustering and/or the determination of best representative datapoint in each cluster depends on the identification of visual patterns based on the vector 614A, 614B determined by the neural network. This may relate to the identification of candlestick patterns that relate to the performance of a stock. In some embodiments, this comprises identifying known candlestick patterns from a database of patterns. In some examples, the neural network is adapted to determine (new) candlestick patterns based on the performance of goods. Not least since it is capable of evaluating large amounts of data, the neural network is capable of identifying (new) candlestick patterns that would not be determinable by humans due for example to complexity, rarity, or length. In some embodiments, the neural network is adapted to present new candlestick patterns and/or to present an indication of what is signalled by a candlestick pattern.

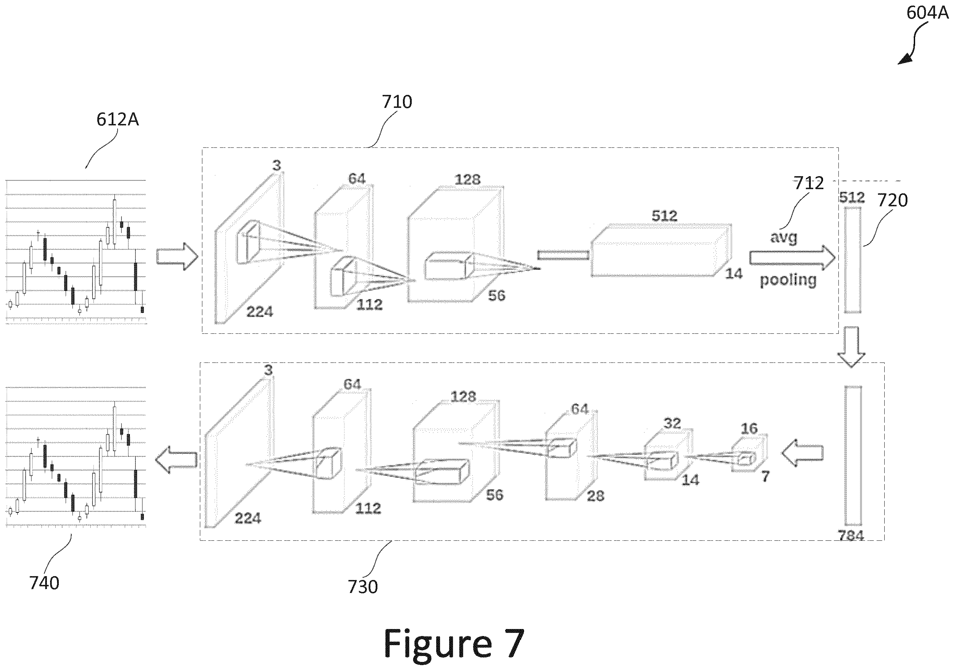

Referring to Figure 7, there is shown in more detail the operation of determining a vector, e.g. the second step 604A of Figure 6.

Determining a vector typically comprises the use of a convolutional autoencoder (although it will be appreciated that other types of neural networks may also be used). The input is the image 612A. Typically, an unsupervised neural network is used, since this avoids the need to label copious amounts of data during the training of the neural network.

The image 612A is passed through a number of layers of a neural network encoder 710 including an average pooling layer 712 to determine a 512-dimensional vector 720 that relates to the image 612A. It will be appreciated that other types of pooling (e.g. max pooling, L2-norm pooling) or no pooling may also be used.

A corresponding decoder 730 comprises a number of layers through which the 512-dimensional vector is passed to obtain a comparison image 740.

The neural network is trained so that the comparison image 740 is similar to the image 612A.

An autoencoder (AE) is a typical artificial neural network for unsupervised feature learning. It learns an effective representation without requiring data labels, by encoding and reconstructing the input via bottleneck. The autoencoder consists of an encoder and a decoder: The encoder uses image data as input and produces a representation as an output and the decoder uses the vector from the encoder as input and re- constructs the original image as an output.

The operation of a fully-connected autoencoder with 3 layers - encoding, hidden and decoding layers - is described here. It will be appreciated that autoencoders with further layers may also be used.

The encoder f projects the input x to the hidden layer representation (encoding) h.

Typically, f includes a linear transform followed by a nonlinear one:

$$h = f(x) = \sigma(Wx + b)$$

where W is the linear transform; b is the bias; and $\sigma$ is the nonlinear (activation) function. There are many 'activation' functions available such as sigmoid, tanh and RELU. Typically, the neural network described herein uses RELU (REctified Linear Units).

The decoder g maps the hidden representation h back to the input x via another linear transform W' and the same 'activation' function $\sigma$:

$$x = g(h) = \sigma(W'h + b')$$

To optimise {W', W, b, b'}, the autoencoder uses the cost function:

$$\min_{W,b,W',b'} \sum_{i=1}^{N} \left|\left| x_i - g(f(x_i)) \right|\right|^2$$

where $x_i$ represents the ith one of N training samples.

Using the above cost function, the autoencoder parameters can be learned via mini-batch stochastic gradient descent.

Traditional autoencoders ignore the 2D image structure. Therefore, typically a convolutional autoencoder is used with convolution layers that help to capture the spatial information in images and reduce parameter redundancy compared to traditional autoencoders.

When trained with a reconstruction objective, the convolutional autoencoder network learns to compress input images to the 512-dimensional bottleneck in a manner that preserves as much information as possible in order to be able to reconstruct the input. Thus, this single 512-dimensional vector encodes the 20-day 4-channel price history of the stock (or other variable parameter), and provides the representation for further processing (clustering and portfolio construction).

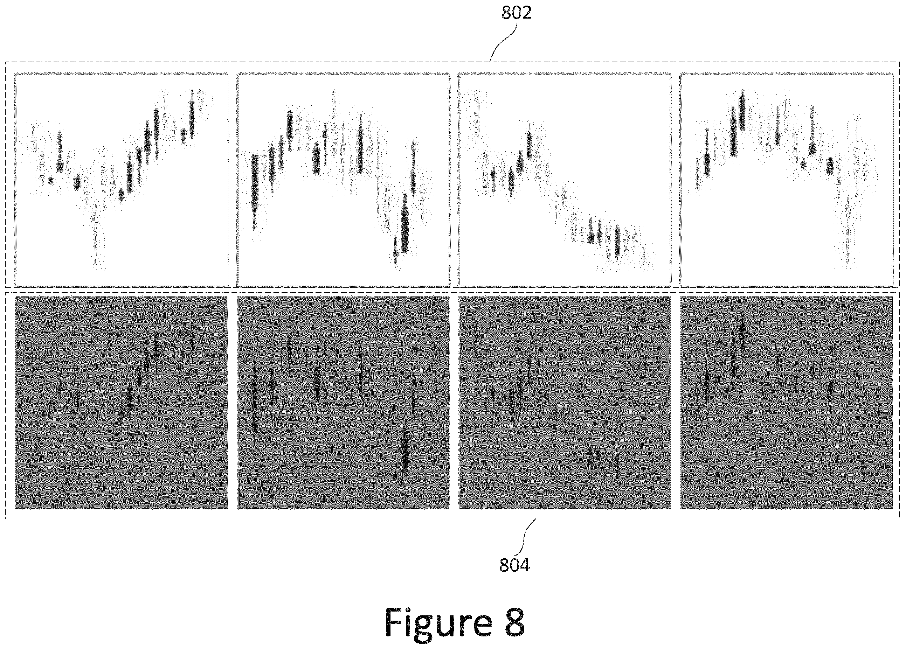

Referring to Figure 8, there is shown a set of input images 802 that are passed to the neural network and a set of related reconstructed images 804 that are formed by the neural network.

In practice, the input images 802 are those formed from raw data (e.g. the input data 610A, 610B of Figure 6), whereas the reconstructed images are those formed by passing the determined vector 614A, 614B of Figure 6 through the decoder described with reference to Figure 7. There are typically some differences between the input images 802 and the reconstructed images 804, for example the background pixels of the reconstructed images 804 typically have non-zero (but still small) values. This is (and with reference to Figure 6) an indication that the vector 614A, 614B is not equivalent to the input data 610A, 610B but rather is a representation of the input image 612A, 612B.

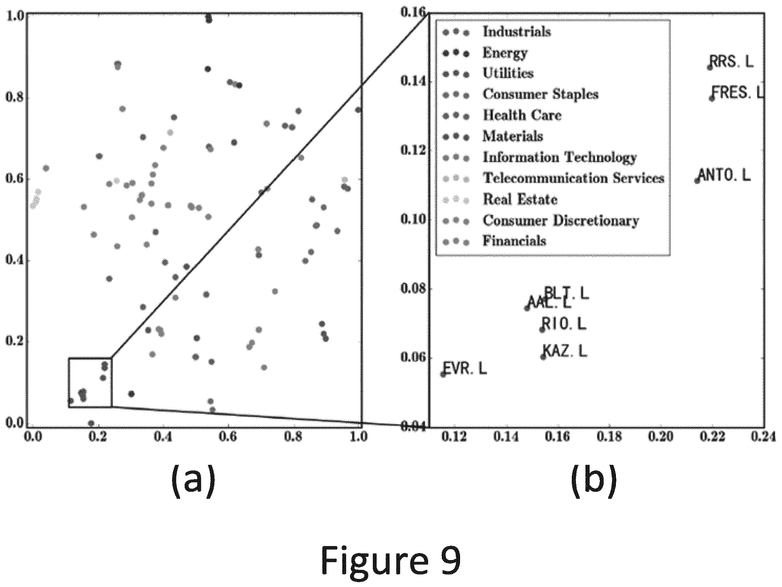

Referring to Figure 9a, there is shown a T-distributed Stochastic Neighbour Embedding (t-SNE) visualisation of stock vectors as determined using the described neural network. The t-SNE visualisation illustrates how goods are clustered based on similarity, an exemplary cluster is shown in Figure 9b.

The clustering typically comprises deterministic clustering, typically where a network modularity method is used to find the cluster structure of the stocks. Each stock is set as one node and the link between each pair of stocks is set as the correlation calculated by the learned features. Modularity is the fraction of the links that fall within the given group minus the expected fraction if links are distributed at random. Modularity optimisation is often used for detecting community structure in networks.

The clustering method operates on a graph (e.g. of stocks), and updates the graph to group datapoints (stocks) so as to eventually achieve maximum modularity before terminating. Thus, it does not need a specified number of clusters and is not affected by initial node selection.

The process typically used for clustering is a fast greedy approach that can be separated into two steps:

1. Initially, each node in network is considered a cluster. Then, for each node i, one considers its neighbour j and calculates the modularity increment by moving i from its cluster to the cluster of j. The node i is placed in the cluster where this increment is maximum, but only if this increment is positive. If no positive increment is possible, the node i stays in its original cluster. This process is applied repeatedly for all nodes until no further increment can be achieved.
2. The second step is to build a new network whose nodes are the clusters found in the first step. The weights of the links between the new nodes are given by the sum of the number of the links between nodes from the corresponding component clusters now included in that node.

The key notion of modularity increment $\Delta Q(x, y)$, where x is one of the new nodes and y is x's neighbour, is defined as:

$$\Delta Q(x,y) = \left[ \frac{e_{in,c_y} + 2k_{x,c_y}}{2m} - \left( \frac{e_{tot,c_y} + 2k_x}{2m} \right)^2 \right] - \left[ \frac{e_{in,c_y}}{2m} - \left( \frac{e_{tot,c_y}}{2m} \right)^2 - \left( \frac{k_x}{2m} \right)^2 \right]$$

where $c_y$ is the cluster that contains the node y;

$e_{in,cy}$ is the number of the links inside cluster $c_y$;

$e_{tot,cy}$ denotes the sum of degrees of nodes in the cluster $c_y$;

$k_x$ is the degree of the node x;

$k_{x,cy}$ is the sum of the links from the node x to the nodes in the cluster $c_y$; and

m is the number of all the links in the network.

The end result is a segmentation of the market into a maximum modularity graph with K nodes/clusters, where each node contains all the stocks that cluster together. Whether the graph is fully connected or not, the above method finds a hierarchical cluster structure.

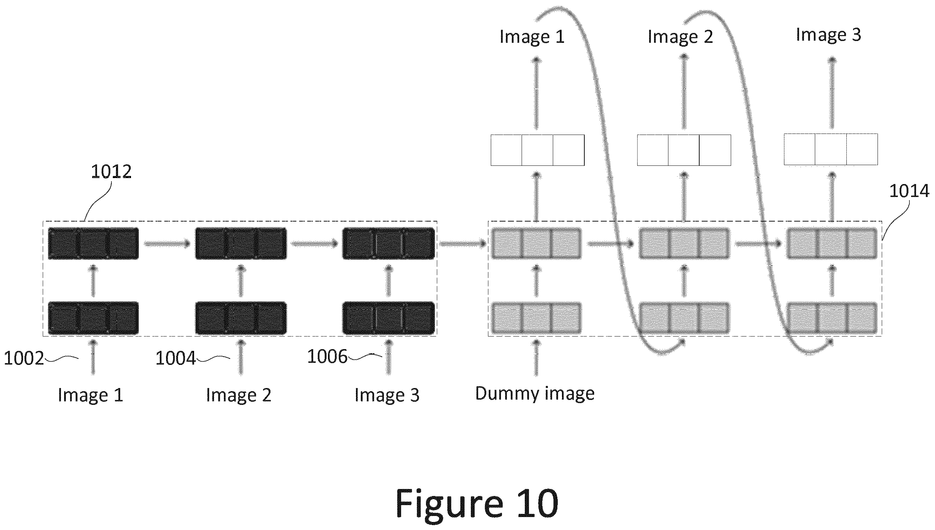

Referring to Figure 10, there is shown a representation of a recursive neural network that is useable to implement the method of Figure 4. The use of a recursive neural network (based on a "seq2seq" model) is particularly well-suited for processing based on a plurality of images used as an input since it takes account of the time order of images. In other words, the recursive neural network is capable of modelling sequential data, for example relating to the state of a variable parameter at different times or over different time periods.

In a first step 1002, a first image is passed into an encoder 1012 comprising a recursive neural network.

In a second step 1004, a second image is passed into the encoder 1012.

In a third step 1006, a third image is passed into the encoder 1012.

The final hidden state of the encoder 1012 then comprises a compact representation of all three images. This representation is in the form of a vector formed by the encoder 1012. The vector can thereafter be used to determine an appropriate actions as has been described with reference to previous figures. In general, the neural network is arranged to determine a vector relating to a plurality of images, where the plurality may comprise any number greater than 1.

A decoder 1014 corresponding to the encoder is useable to obtain representations of the input images based on the output of the encoder 1012.

The images are passed into the encoder 1012 sequentially, typically the images are passed in time order so that: the first image relates to the performance of the stock at for a period x, the second image relates to the performance for a period x + 1, and the third image relates to the performance for a period x + 2 (where the periods may, for example, be days or months).

Typically, a large number of images are used, so that the encoder 1012 is effectively passed a video feed containing a number of frames and provides an output based on this video feed. The video feed may be continuous and/or real-time, so that the method may be continuously updating the vector, and the determination of appropriate actions based on a continuing video feed.

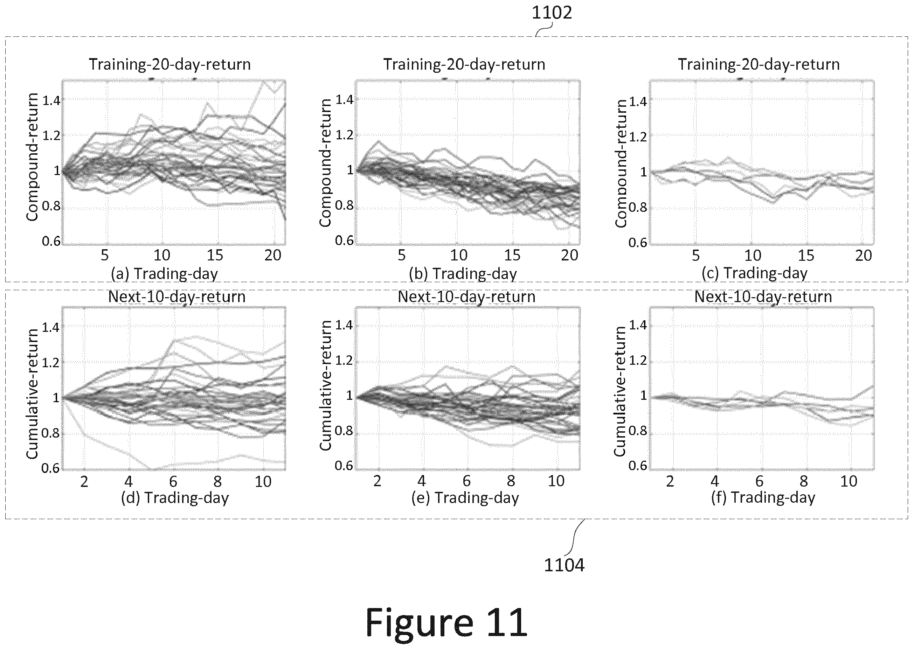

In general, the neural network described with reference to Figure 7 is adapted to form images relating to a plurality of stocks over a certain period of time (this period being comparable for each stock). The neural network of Figure 10 is adapted to form a plurality of images for each of the plurality of stocks. More specifically, the neural network of Figure 7 is typically adapted to form one image of each of the stocks, whereas the recursive neural network of Figure 11 is adapted to form a plurality of images of each of the stocks, each image relating to a different trading period. For each plurality of images, the encoder 1012 outputs a respective vector; the vectors may then be compared to cluster the vectors and used to perform appropriate actions. The use of such a plurality of images of each stock (each image relating to a different time period) has been described with reference to Figure 4.

Further, the use of a plurality of images enables rapid consideration of a long period of data. Typically, images relating to recent data are passed to the neural network and considered in the light of previously received historic data - this avoids the need to pass an ever-growing amount of data into a neural network, as would occur with the use of a network trained for analysis of images relating to single time periods.

*Other operations*

It will be appreciated that the described system and method can be used for operations the than clustering vectors, and that clustering vectors in itself may be used for different purposes. Furthermore, as mentioned briefly above, clustered vectors may be used for the construction of a diverse portfolio.

For example, extracted features form a candlestick chart may be used for investment decisions. As has been described with reference to Figure 3, candlestick patterns are useable to determine the future behaviour of stocks, for example the inverted black hammer 360 can be used as an indicator of the reversal of a downtrend. In this way, the determination of a vector relating to a candlestick chart is useable to determine patterns within the candlestick chart (e.g. the inverted black hammer 260) and hence to determine whether or not it is advisable to, e.g., buy stocks.

In some embodiments, the operation to be performed depends on the determination of one or more variables. As an example, the Sharpe ratio in respect of a plurality of stocks may be determined. The Sharpe ratio is defined as:

$$\text{Sharpe Ratio} = \frac{R_P - R_f}{\sigma_p}$$

where $R_p$ is the return of the portfolio;

$R_f$ is the risk-free rate; and

$\sigma_p$ is the standard deviation of the portfolio's excess return.

The Sharpe ratio is a measure of the risk of a portfolio. Other measures may also be considered, such as the Sortino ratio or the Treynor ratio. These variables may be determined using the vector determined by the neural network. More specifically, by comparing the vector relating to a potential stock to the vectors determined for other stocks of known Sharpe ratio, the Sharpe ratio for the potential stock can be determined and used to inform the determination of an appropriate operation.

The operation to be performed may be the buying or selling of a stock. This operation may depend on a predicted change in the value of the stock, a predicted rate of return, or a predicted portfolio risk that follows the purchase of the stock.

By buying and selling stock in dependence on a Sharpe ratio of a stock a relatively low risk portfolio is obtainable that still has a high rate of return.

For example, the operation performed may be executing a stock trade. In some embodiments, performing an operation comprises outputting information relating to the appropriate operation; as an example, an alarm may be sounded if a threshold risk is surpassed or if a certain loss is predicted based on the present portfolio. There may be a notification shown that suggests buying, or researching further, a certain stock or a notification shown that suggests selling, or researching further, a certain stock that had previously been added to a portfolio.

In various embodiments, a variety of factors are used alone or in combination to determine an appropriate operation to perform, e.g. to determine which stocks to select. Typical factors include:

- Return (profit on an investment), which is defined as: $r_t = (V_f - V_i)/V_i$, where $V_f$ and $V_i$ are the final and initial values, respectively. For example, to compute daily stock return, $V_f$ and $V_i$ are closing prices of today and yesterday, respectively.
- The Sharpe ratio, which comprises a tradeoff of return and stability.
- Maximum Drawdown (MDD), which is the measure of decline from peak during a specific period of investment: MDD $= (V_t - V_p)/V_p$, where $V_t$ and $V_p$ are the mean trough and peak values respectively.
- Daily Mean Return.
- Monthly Mean Return.
- Yearly Mean Return.

Typically, over a period of days, the stocks are clustered based on performance during a training period as previously described. To construct a portfolio, the stock with the lowest Sharpe ratio is selected from each cluster.

Not least since the modular-optimisation based clustering discovers the number of stocks in a data driven way, in some embodiments, in different trading periods there are different number of clusters. Assume that there are obtained $K_1$ clusters in one period and $K_2$ stocks are desired to construct a portfolio. Then, letting Q and R indicate quotient and remainder respectively, in $[Q, R] = K_2/K_1$: $K_2$ stocks are picked by taking (i) Q stocks from each of the $K_1$ clusters and (ii) the remaining R best performing stocks across all $K_1$ clusters. Then $1/K_2$ of the fund is allocated to each of the chosen stocks.

Referring to Figure 11, there is shown historic performance 1102 of stocks over a training period of twenty days.

In the example of Figure 11, stocks have been clustered into three groups based on the historic performance (using a neural network as described herein). There is then shown the subsequent performance 1104 of each stock over the following ten days. It can be seen that within each cluster stocks exhibit similar behaviour over the ten day subsequent performance period - this illustrates that the clustering of stocks is an effective way of judging future performance (and judging which stocks perform similarly and which stocks instead lead to a diverse portfolio).

Another possible alternative operation is the generation of a reconstructed image, such as that shown in Figure 8. This may assist in interpreting and understanding the operation of the neural network aspects of the invention.

Alternatives and modifications

Various other modifications will be apparent to those skilled in the art for example while the detailed description has generally referred to images comprising stock prices over a period of twenty days, it will be appreciated that images can be used that comprise data for any period. More generally, images can be used that refer to any sort of data; typically, images are used that relate to the change in data values over a period of time.

While the detailed description has primarily related to the use of image processing to analyse candlestick charts, it will be appreciated that similar processes are applicable to a range of images.

The method has been primarily described with relation to selecting stocks based on Sharpe ratio and/or rate of return. It will be appreciated that a number of other variables are useable within the building of a stock portfolio. As an example, the methods described can be used to form an index tracking portfolio, that is a selection of stocks representative of an index, such as the FTSE 100.

While the detailed description has primarily considered a method wherein images are formed from received data before determination of a vector, in some embodiments, the neural network is adapted to receive images and to form a vector representative of the image based on the received image.

In an alternative, clustering may occur within a vector, i.e. features of images within a vector are compared and clustered, rather than different vectors.

In some embodiments, the neural network is adapted to receive data and form a vector representative of an image that can be formed using the data based on the received data.

Although the description has principally been with reference to the variable parameter being an asset price (being made up of high price, low price, opening price, and close/end price), it could also relate to volume of an asset, or optionally a combination of price and volume.

Although the description has principally been with reference to the data considered being financial data that is represented in the form of candlesticks, it will be appreciated that this is an exemplary use case and that the methods, systems, and apparatuses described may be used within the processing of images relating to a variety of different types of data including, but not limited to: internet viewing patterns; entry data to restricted areas; actuator data; medical data; attendance data; signal processing data (e.g. in communications). Such data may be represented in the form of candlestick charts, or as another form of chart or graph.

It will be understood that the present disclosure has been described above purely by way of example, and modifications of detail can be made within the scope of the disclosure.

Reference numerals appearing in the claims are by way of illustration only and shall have no limiting effect on the scope of the claims.

**Claims**

1. A computer-implemented method of image processing, comprising:

   receiving a plurality of images, the plurality of images being related to the state of a variable parameter, wherein each image relates to the state of the variable parameter at different times;
   using an artificial neural network, determining a vector which represents features of the plurality of images; and
   performing an action using said vector.

2. The method of Claim 1, wherein performing an action comprises clustering a plurality of vectors, wherein each vector represents features of a different plurality of images, each plurality of images being related to the state of a different variable parameter, preferably wherein the different variable parameters relate to the same type of parameter in respect of different entities.

3. The method of Claim 2, wherein performing an action further comprises selecting a sub-set of vectors from the clustered plurality of vectors based on one or more criteria thereby to select a sub-set from a set of variable parameters.

4. The method of any preceding claim, wherein performing an action comprises assigning the vector to a cluster, optionally based on one or more criteria.

5. The method of Claim 3 or 4, wherein the one or more criteria comprise at least one of: a similarity of one or more vectors; a similarity of one or more vectors to a pre-determined reference; and a dissimilarity of one or more vectors.

6. The method of any of Claims 2 to 5, wherein the artificial neural network is used for clustering.

7. The method of any preceding claim, wherein performing an action comprises comparing the vector against a further vector representing features of a further plurality of images, the further plurality of images being related to the state of a further variable parameter.

8. The method of any preceding claim, wherein the artificial neural network comprises a recurrent neural network, preferably wherein the recurrent neural network comprises a seq2seq autoencoder.

9. The method of any preceding claim, wherein each image relates to the state of the variable parameter at a discrete time.

10. The method of any of Claims 1 to 8, wherein each image relates to the state of the variable parameter over a different time period.

11. The method of any preceding claim, wherein the plurality of images comprises at least parts of a candlestick chart, preferably wherein the variable parameter is price(s) of a financial asset.

12. The method of any preceding claim, further comprising forming the plurality of images from time-series data.

13. The method of any preceding claim, further comprising determining an updated vector, the updated vector representing features of an updated plurality of images, the updated plurality of images comprising at least one image from the plurality of images and at least one additional image, preferably wherein the additional image relates to the state of the variable parameter at a later time than the plurality of images.

14. The method of any preceding claim, wherein the action comprises producing a representation of the plurality of images.

15. An apparatus for image processing, comprising:

means for receiving a plurality of images, the plurality of images being related to the state of a variable parameter, wherein each image relates to the state of the variable parameter at different times;
an artificial neural network for determining a vector which represents features of the plurality of images; and
means for performing an action using said vector.


**Amended claims in accordance with Rule 137(2) EPC.**

1. A computer-implemented method of image processing, comprising:

receiving a plurality of images, the plurality of images being related to the state of a variable parameter, wherein each image comprises part of a candlestick chart relating to the state of the variable parameter at different times;
using an artificial recurrent neural network, determining a vector which represents features of the plurality of images, wherein the plurality of images is used as an input to the artificial recurrent neural network; and
performing an action using said vector.

2. The method of Claim 1, wherein performing an action comprises clustering a plurality of vectors, wherein each vector represents features of a different plurality of images, each plurality of images being related to the state of a different variable parameter, preferably wherein the different variable parameters relate to the same type of parameter in respect of different entities.

3. The method of Claim 2, wherein performing an action further comprises selecting a sub-set of vectors from the clustered plurality of vectors based on one or more criteria thereby to select a sub-set from a set of variable parameters.

4. The method of any preceding claim, wherein performing an action comprises assigning the vector to a cluster, optionally based on one or more criteria.

5. The method of Claim 3 or 4, wherein the one or more criteria comprise at least one of: a similarity of one or more vectors; a similarity of one or more vectors to a pre-determined reference; and a dissimilarity of one or more vectors.

6. The method of any of Claims 2 to 5, wherein the artificial neural network is used for clustering.

7. The method of any preceding claim, wherein performing an action comprises comparing the vector against a further vector representing features of a further plurality of images, the further plurality of images being related to the state of a further variable parameter.

8. The method of any preceding claim, wherein the recurrent neural network comprises a seq2seq autoencoder.

9. The method of any preceding claim, wherein each image relates to the state of the variable parameter at a discrete time.

10. The method of any of Claims 1 to 8, wherein each image relates to the state of the variable parameter over a different time period.

11. The method of any preceding claim, wherein the variable parameter is price(s) of a financial asset.

12. The method of any preceding claim, further comprising forming the plurality of images from time-series data.

13. The method of any preceding claim, further comprising determining an updated vector, the updated vector representing features of an updated plurality of images, the updated plurality of images comprising at least one image from the plurality of images and at least one additional image, preferably wherein the additional image relates to the state of the variable parameter at a later time than the plurality of images.

14. The method of any preceding claim, wherein the action comprises producing a representation of the plurality of images.

15. An apparatus for image processing, comprising:

means for receiving a plurality of images, the plurality of images being related to the state of a variable parameter, wherein each image comprises part of a candlestick chart relating to the state of the variable parameter at different times;
an artificial recurrent neural network for determining a vector which represents features of the plurality of images, wherein the plurality of images is used as an input to the artificial recurrent neural network; and
means for performing an action using said vector.

| | |
|---|---|
| Low | 20 |
| Open | 40 |
| Close | 80 |
| High | 100 |

(a)

| | |
|---|---|
| Low | 20 |
| Open | 80 |
| Close | 40 |
| High | 100 |

(b)

Figure 1

(a)

(b)

Figure 2

Figure 3

EP 3 739 517 A1

Computer
device
4000

4014

CPU 4002

Communication
interface 4004

Memory 4006

Storage 4008

4016

User interface
4012

4018

4020

# Figure 4

500

502

Obtain data

504

Form image from data

506

Determine vector using neural
network

508

Perform operation

# Figure 5

Figure 6

EP 3 739 517 A1

**Figure 7**

Figure 8

Figure 9

Figure 10

Figure 11

Europäisches
Patentamt

European
Patent Office

Office européen
des brevets

**EUROPEAN SEARCH REPORT**

Application Number

EP 19 17 5244

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Guosheng Hu ET AL: "Deep Stock Representation Learning: From Candlestick Charts to Investment Decisions", arXiv1709.03803v1, 12 September 2017 (2017-09-12), pages 1-9, XP055633739, Retrieved from the Internet: URL:https://arxiv.org/pdf/1709.03803v1.pdf [retrieved on 2019-10-18] * the whole document * | 1-15 | INV. G06K9/62 G06K9/00 |
| X | HU GUOSHENG ET AL: "Deep Stock Representation Learning: From Candlestick Charts to Investment Decisions", 2018 IEEE INTERNATIONAL CONFERENCE ON ACOUSTICS, SPEECH AND SIGNAL PROCESSING (ICASSP), IEEE, 15 April 2018 (2018-04-15), pages 2706-2710, XP033401531, DOI: 10.1109/ICASSP.2018.8462215 [retrieved on 2018-09-10] * Sections 2 and 3; page 2707 - page 2709; figures 1, 3 * | 1-15 | |
| X | MARC VELAY ET AL: "Stock Chart Pattern recognition with Deep Learning", ARXIV.ORG, CORNELL UNIVERSITY LIBRARY, 201 OLIN LIBRARY CORNELL UNIVERSITY ITHACA, NY 14853, 1 August 2018 (2018-08-01), XP081411392, * Sections 1, 3 and 4 * | 1,7-13, 15 | |

TECHNICAL FIELDS SEARCHED (IPC)

G06K

-/--

The present search report has been drawn up for all claims

| Place of search | Date of completion of the search | Examiner |
|---|---|---|
| The Hague | 18 October 2019 | Rajadell Rojas, Olga |

Europäisches
Patentamt

European
Patent Office

Office européen
des brevets

# EUROPEAN SEARCH REPORT

Application Number

EP 19 17 5244

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LAVANGNANANDA K ET AL: "Image processing approach to features extraction in classification of control chart patterns", SOFT COMPUTING IN INDUSTRIAL APPLICATIONS, 2005. SMCIA/05. PROCEEDINGS OF THE 2005 IEEE MIDNIGHT-SUMMER WORKSHOP ON ESPOO, FINLAND JUNE 28-30, 2005, PISCATAWAY, NJ, USA,IEEE, 28 June 2005 (2005-06-28), pages 85-90, XP010814657, DOI: 10.1109/SMCIA.2005.1466953 ISBN: 978-0-7803-8942-7 * abstract * * Sections I, IV, V * ----- | 1,7-13, 15 | |

TECHNICAL FIELDS
SEARCHED (IPC)

The present search report has been drawn up for all claims

| Place of search | Date of completion of the search | Examiner |
|---|---|---|
| The Hague | 18 October 2019 | Rajadell Rojas, Olga |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)